# EUROPEAN PATENT APPLICATION

(11) **EP 4 755 713 A1**
(43) Date of publication of application: **10.06.2026**
(21) Application number: 25219941.9
(22) Date of filing: 02.12.2025
(51) Int. Cl.: B60N 2/90, B60N 2/02

(54) **INTEGRATED AUTOMOBILE SEAT LEG SUPPORT**

(30) Priority: 03.12.2024 CN 202411759782
(71) Applicant: Adient (Chongqing) Automotive Components Co., Ltd., Liangjiang New Area, Chongqing 401122 (CN)
(72) Inventor: SHI, Zhangneng, Liangjiang New Area, Chongqing, 401122 (CN); ZHANG, Ming, Liangjiang New Area, Chongqing, 401122 (CN); CHEN, Zhiyong, Liangjiang New Area, Chongqing, 401122 (CN); XIN, Yi, Chongqing, Liangjiang New Area, 401122 (CN)
(74) Representative: Liedtke & Partner Patentanwälte

(57) **Abstract**

The disclosure concerns an integrated leg support for a vehicle seat, comprising a seat frame (1), wherein a front portion of the seat frame is provided with a first driving mechanism (14) and a support frame (3) capable of sliding back and forth; the support frame is configured to support an occupant's thighs; the first driving mechanism is configured to drive the support frame to slide out from the front portion of the seat frame or retract into the seat frame; a front portion of the support frame is provided with a second driving mechanism (15) and a calf support assembly that is connected to the support frame in a flippable manner; the calf support assembly is configured to support the occupant's calves; and the second driving mechanism is configured to drive the calf support assembly to flip relative to the support frame.

## Description

### Technical field

The present invention relates to the technical field of leg supports for vehicle seats, and specifically to an integrated leg support for a vehicle seat.

### Background Art

To increase comfort when riding in a vehicle, people often like to recline the seat back and sit in a backward-tilted posture. However, in this posture, the contact point between an occupant's buttocks and the seat cushion is closer to the front end of the seat compared with the contact point in an upright seated state. This causes the front ends of the occupant's thighs to be in a suspended state, and the overall riding comfort needs to be improved.

To improve the occupant's riding comfort, two existing solutions have emerged on the market: 1. A thigh support is arranged at the front end of the seat cushion. When the occupant is in the backward-tilted posture, the thigh support can extend forward to support the front ends of the occupant's thighs. However, in this method, the occupant's calves remain dangling at all times. 2. A calf support is arranged on the lower side of the front end of the seat. The calf support can rotate forward and extend to support the occupant's calves, allowing the occupant to lie back on the seat. However, in this mode, the front ends of the occupant's thighs are still in the suspended state.

### Summary of the invention

In view of this, the present invention provides an integrated leg support for a vehicle seat, which is intended to ensure that the occupant's legs can be fully supported, thereby ensuring the overall riding comfort.

To achieve the above objective, the technical solution of the present invention is as follows:
An integrated leg support for a vehicle seat, comprising a seat frame, wherein: a front portion of the seat frame is provided with a first driving mechanism and a support frame capable of sliding back and forth; the support frame is configured to support an occupant's thighs; the first driving mechanism is configured to drive the support frame to slide out from the front portion of the seat frame or retract into the seat frame; a front portion of the support frame is provided with a second driving mechanism and a calf support assembly that is connected to the support frame in a flippable manner; the calf support assembly is configured to support the occupant's calves; and the second driving mechanism is configured to drive the calf support assembly to flip relative to the support frame.

With the above structure, the support frame that is slidably arranged at the front end of the seat frame can support the front ends of the occupant's thighs, and the calf support assembly that is arranged on the support frame in a flippable manner can support the occupant's calves. Through the combination design of the thigh support and calf support, the occupant's legs are fully supported, thereby ensuring the occupant's riding comfort.

Preferably, the calf support assembly comprises a rotary bracket rotatably arranged on the support frame and a leg support extension assembly slidably arranged on the rotary bracket; the leg support extension assembly comprises a driving crossbar slidably arranged on the rotary bracket and a first extension plate connected to the driving crossbar; an end portion of the driving crossbar is provided with a guide block slidably engaged therewith; a sliding direction of the guide block relative to the driving crossbar is perpendicular in space to a sliding direction of the driving crossbar relative to the rotary bracket; the guide block is rotatably connected to the support frame via a first support shaft; the rotary bracket is rotatably connected to the support frame via a second support shaft; and the first support shaft is eccentrically arranged relative to the second support shaft. With the above structure, the driving crossbar can slide forward synchronously while the rotary bracket rotates, thereby driving the first extension plate to extend and retract synchronously.

Preferably, a third slide rail is provided on an inner side of the rotary bracket; the first extension plate is slidably mounted on the third slide rail; a first linkage mechanism is provided between the driving crossbar and the first extension plate; and when the driving crossbar slides relative to the rotary bracket, the first linkage mechanism is able to force the first extension plate to slide synchronously. With the above structure, the first linkage mechanism further ensures that the first extension plate can move synchronously with the driving crossbar during the rotation of the rotary bracket.

Preferably, the first linkage mechanism comprises a first link, a second link and a third link which are hinged in sequence; an end of the first link away from the second link is hinged to the rotary bracket; a middle portion of the second link is rotatably connected to the driving crossbar; and an end of the third link away from the second link is hinged to the first extension plate. With the above structure, the three-link design can facilitate the forward unfolding of the first extension plate while also making the overall structure more compact when the first extension plate is folded into the rotary bracket.

Preferably, a fourth link is further provided between the first link and the third link, two ends of the fourth link are hinged to the first link and the third link, respectively, and the fourth link is arranged in parallel with the second link. With the above structure, the four-link mechanism with a parallelogram structure makes the sliding direction of the first extension plate more stable when it slides.

Preferably, a middle portion of the seat frame is provided with a connecting rod extending in a width direction thereof, and the first driving mechanism is arranged between the connecting rod and the support frame; the first driving mechanism comprises a first driving electric motor, a first lead screw and a first driving block; the first driving electric motor is fixedly arranged on the support frame; the first lead screw is arranged on an output end of the first driving electric motor and extends toward a side where the connecting rod is located; and the first driving block is hinged to a middle position of the connecting rod and threadedly connected to the first lead screw. With the above structure, the unfolding and folding of the thigh support can be electrically controlled.

Preferably, the second driving mechanism comprises a second driving electric motor, a second lead screw and a second driving block; the second driving electric motor is hinged to a bottom portion of the rotary bracket; the second lead screw is arranged on an output end of the second driving electric motor and extends toward a side where the support frame is located; and the second driving block is hinged to a middle position of a bottom portion of the support frame and threadedly connected to the second lead screw. With the above structure, the rotation of the rotary bracket can be electrically controlled.

Preferably, a second extension plate is slidably mounted at a front end of the first extension plate; a third driving mechanism and a second linkage mechanism are provided between the first extension plate and the second extension plate; and both the third driving mechanism and the second linkage mechanism are configured to drive the second extension plate to slide relative to the first extension plate. With the above structure, a two-stage extension of the calf support can be realized, thereby meeting the needs of occupants with different body heights for the calf support.

Preferably, the third driving mechanism comprises a third driving electric motor, a third lead screw and a third driving block; the third driving electric motor is fixedly arranged on the second extension plate; the third lead screw is arranged on an output end of the third driving electric motor and extends toward a side where the first extension plate is located; and the third driving block is hinged to the second linkage mechanism and threadedly connected to the third lead screw. With the above structure, the extension and retraction of the second extension plate can be electrically controlled.

Preferably, the second linkage mechanism comprises a fifth link , a sixth link and a seventh link which are hinged in sequence; an end of the fifth link away from the sixth link is hinged to the first extension plate; a middle portion of the sixth link is hinged to the third driving block; an end of the seventh link away from the sixth link is hinged to the third driving electric motor; an eighth link is provided between the fifth link and the seventh link; two ends of the eighth link are hinged to the fifth link and the seventh link, respectively; and the eighth link is arranged in parallel with the sixth link. With the above structure, the four-link mechanism makes the sliding direction of the second extension plate more stable while also making the overall structure more compact when the second extension plate is folded.

Compared with the prior art, the invention has the following beneficial effects:
1. With the integrated leg support for the vehicle seat provided by the present invention, the support frame that is slidably arranged at the front end of the seat frame can support the front ends of the occupant's thighs, and the calf support assembly that is arranged on the support frame in a flippable manner can support the occupant's calves. On this basis, through the combination design of the thigh support and calf support, the occupant's legs are fully supported, thereby ensuring the occupant's riding comfort.
2. Both the first extension plate and the second extension plate are connected via a four-link mechanism, which ensures that the overall structure is more compact and occupies less space when the entire calf support is folded.

### Brief description of the drawings

- Fig. 1: is a schematic structural view of an integrated leg support in an unfolded state;
- Fig. 2: is a schematic structural view of the integrated leg support in a folded state;
- Fig. 3: is a schematic structural view showing the arrangement position of a guide block 8;
- Fig. 4: is a schematic structural view of a calf support in a two-stage extended state;
- Fig. 5: is a structural schematic view showing a first driving mechanism 14; and
- Fig. 6: is a structural schematic view showing a second driving mechanism 15.

### Detailed description

The present invention will be further described below with reference to the embodiments and drawings.

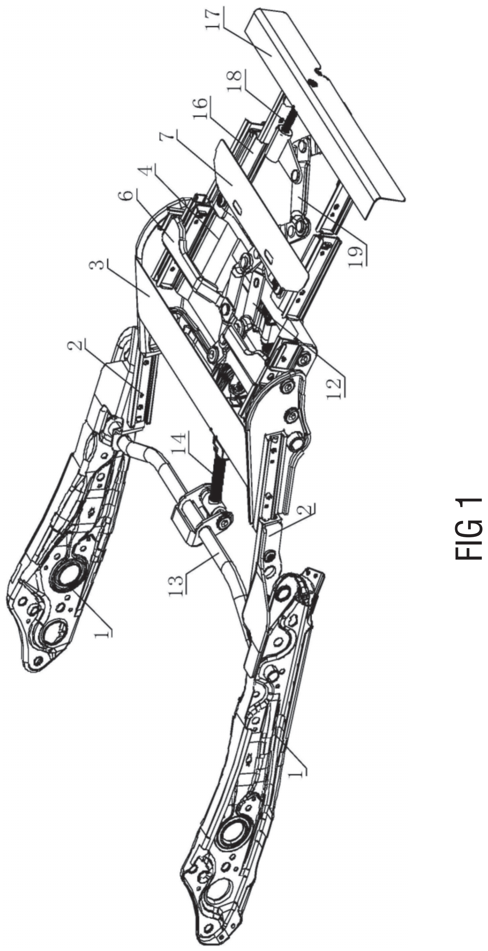

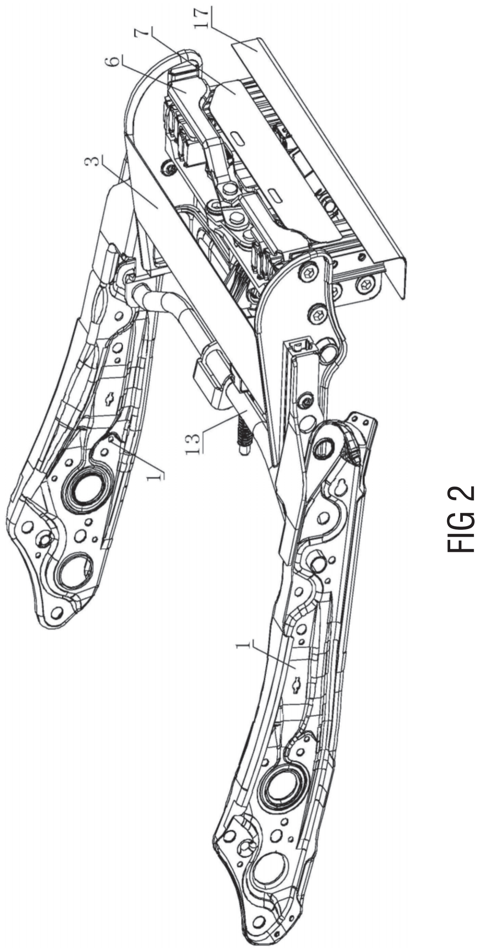

As shown in Figs. 1 and 2, an integrated leg support for a vehicle seat comprises a seat frame 1. A first slide rail 2 is fixedly mounted on the inner side of the front end of the seat frame 1 by bolts. The first slide rail 2 is arranged along the front-rear direction of the vehicle seat. A support frame 3 is slidably mounted on the first slide rail 2. The support frame 3 is configured to support the front ends of the occupant's thighs. In this embodiment, the first slide rail 2 is inclined, and when the support frame 3 is unfolded, the occupant's thighs are slightly raised. A first driving mechanism 14 is further provided between the front end of the seat frame 1 and the support frame 3. The first driving mechanism 14 is configured to drive the support frame 3 to slide out from the front end of the seat frame 1 or retract into the seat frame 1. A second driving mechanism 15 and a calf support assembly that is connected to the support frame 3 in a flippable manner are provided at the front end of the support frame 3. The calf support assembly is configured to support an occupant's calves, and the second driving mechanism 15 is configured to drive the calf support assembly to flip relative to the support frame 3.

Through the support frame 3 that is slidably arranged at the front end of the seat frame, the front ends of the occupant's thighs are supported. Then, through the calf support assembly that is arranged on the support frame 3 in the flippable manner, the occupant's calves are supported. On this basis, through the combination design of the thigh support and calf support, the occupant's legs can be fully supported, thereby ensuring the occupant's riding comfort.

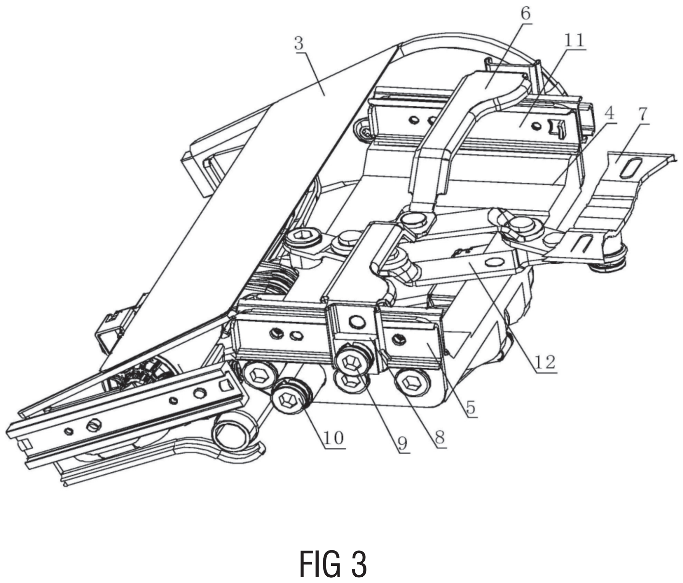

As shown in Figs. 1 and 3, the calf support assembly comprises a rotary bracket 4 rotatably arranged on the support frame 3 and a leg support extension assembly slidably arranged on the rotary bracket 4. Second slide rails 5 are fixedly mounted on the outer sides of two ends of the rotary bracket 4 by bolts. The leg support extension assembly comprises a driving crossbar 6 slidably mounted on the second slide rails 5 and a first extension plate 7 connected to the driving crossbar 6. Two ends of the driving crossbar 6 are mounted with guide blocks 8 slidably engaged therewith. The sliding direction of the guide block 8 relative to the driving crossbar 6 is perpendicular in space to the sliding direction of the driving crossbar 6 relative to the second slide rails 5. The guide blocks 8 are rotatably mounted on the support frame 3 via a first support shaft 9, the rotary bracket 4 is rotatably connected to the support frame 3 via a second support shaft 10, and the first support shaft 9 is eccentrically arranged relative to the second support shaft 10. On this basis, when the rotary bracket 4 rotates forward relative to the support frame 3, since the guide block 8 is eccentrically arranged and the driving crossbar 6 is slidably arranged on the second slide rails 5, the rotational force of the guide block 8 cannot drive the driving crossbar 6 to rotate synchronously. However, the eccentric rotational force of the guide block 8 can force the guide block 8 to slide downward relative to the end portion of the driving crossbar 6, while the driving crossbar 6 can slide forward relative to the second slide rail 5. Since the driving crossbar 6 is connected to the first extension plate 7, the first extension plate 7 can extend forward synchronously while the rotary bracket 4 rotates forward.

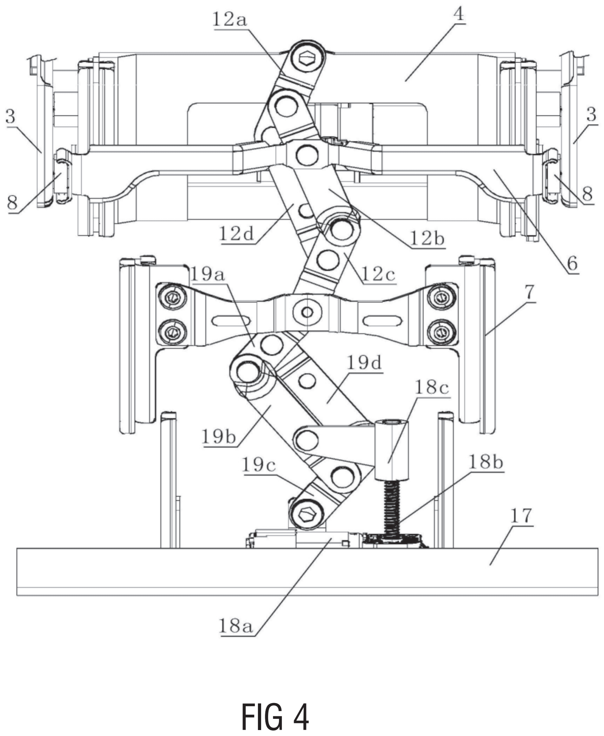

Specifically, as shown in Figs. 3 and 4, a third slide rail 11 is fixedly mounted on the inner side of the second slide rail 5 by bolts. The first extension plate 7 is slidably mounted on the third slide rails 11. A first linkage mechanism 12 is mounted between the driving crossbar 6 and the first extension plate 7. When the driving crossbar 6 slides relative to the second slide rails 5, the first linkage mechanism 12 can force the first extension plate 7 to slide synchronously.

Further, the first linkage mechanism 12 comprises a first link 12a, a second link 12b, and a third link 12c which are hinged in sequence. The end of the first link 12a away from the second link 12b is hinged to the rotary bracket 4. The middle portion of the second link 12b is rotatably connected to the middle portion of the driving crossbar 6. The end of the third link 12c away from the second link 12b is hinged to the middle position of the first extension plate 7.

A fourth link 12d is further mounted between the first link 12a and the third link 12c. Two ends of the fourth link 12d are hinged to the first link 12a and the third link 12c, respectively. The fourth link 12d is arranged in parallel with the second link 12b.

The driving crossbar 6 and the first extension plate 7 are connected via a four-link mechanism, and the second slide rail 5 and the third slide rail 11 are stacked, enabling the first extension plate 7 to extend synchronously while the rotary bracket 4 rotates, so that the extension length can be increased. In addition, when the first extension plate 7 is folded, the entire calf support assembly structure becomes more compact. The four links adopt a parallelogram structure, which also ensures that the sliding extension of the first extension plate 7 is more stable and directional.

As shown in Fig. 1, the middle portion of the seat frame 1 is provided with a connecting rod 13 extending along its width direction, and the first driving mechanism 14 is arranged between the connecting rod 13 and the support frame 3.

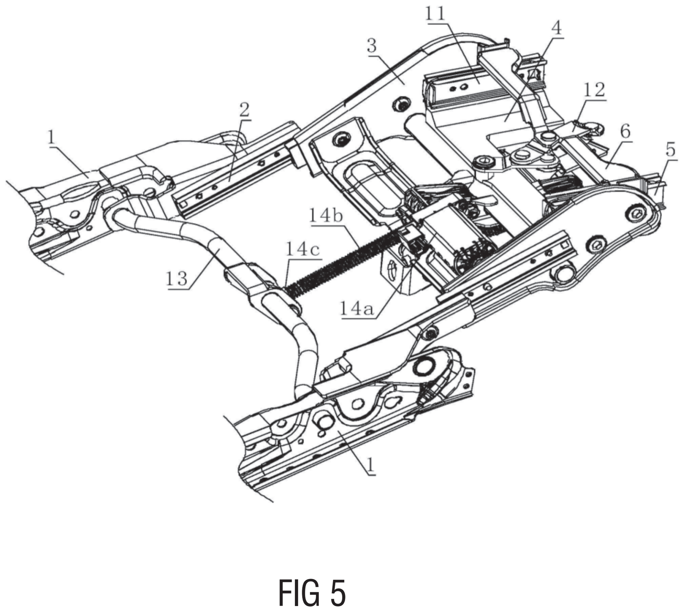

Specifically, as shown in Fig. 5, the first driving mechanism 14 comprises a first driving electric motor 14a, a first lead screw 14b, and a first driving block 14c. The first driving electric motor 14a is fixedly mounted on the support frame 3. The first lead screw 14b is mounted on an output end of the first driving electric motor 14a and extends towards the side where the connecting rod 13 is located. The first driving block 14c is hinged to a middle position of the connecting rod 13 and threadedly connected to the first lead screw 14b. When the first driving electric motor 14a operates, under the transmission action of the first lead screw 14b and the first driving block 14c, the support frame 3 can slide back and forth relative to the first slide rail 2.

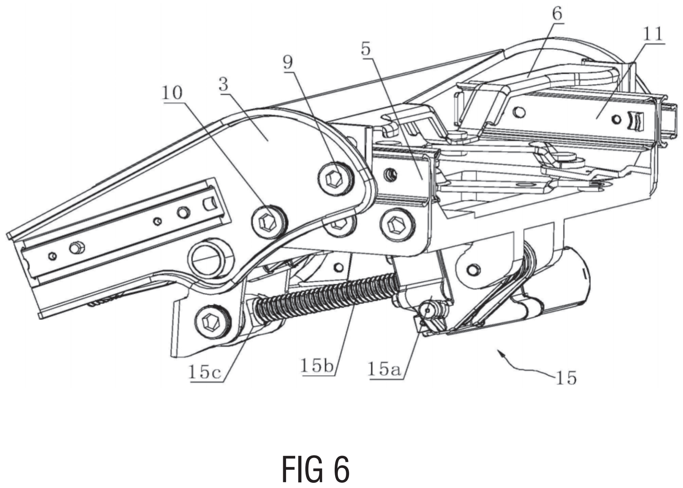

As shown in Fig. 6, the second driving mechanism 15 is arranged between the rotary bracket 4 and the support frame 3. Specifically, the second driving mechanism comprises a second driving electric motor 15a, a second lead screw 15b, and a second driving block 15c. The second driving electric motor 15a is hinged to the lower middle portion of the rotary bracket 4. The second lead screw 15b is arranged on an output end of the second driving electric motor 15a and extends toward the side where the support frame 3 is located. The second driving block 15c is hinged to a middle position of the bottom portion of the support frame 3 and threadedly connected to the second lead screw 15b.

As shown in Fig. 1, in this embodiment, fourth slide rails 16 are fixedly mounted on the inner sides of both ends of the first extension plate 7 by bolts. A second extension plate 17 is slidably mounted on the fourth slide rails 16. The second extension plate 17 slidably mounted can further extend the extension length of the calf support, thereby meeting the needs of occupants with different body heights for the leg support. A third driving mechanism 18 and a second linkage mechanism 19 are further provided between the first extension plate 7 and the second extension plate 17. The sliding extension of the second extension plate 17 can be electrically controlled by the third driving mechanism 18 and the second linkage mechanism 19.

Specifically, as shown in Fig. 4, the third driving mechanism 18 comprises a third driving electric motor 18a, a third lead screw 18b, and a third driving block 18c. The third driving electric motor 18a is fixedly mounted at a front end position of the second extension plate 17. The third lead screw 18b is arranged on an output end of the third driving electric motor 18a and extends toward the side where the first extension plate 7 is located. The third driving block 18c is hinged to the second linkage mechanism 19 and threadedly connected to the third lead screw 18b.

Further, the second linkage assembly 19 comprises a fifth link 19a, a sixth link 19b, and a seventh link 19c which are hinged in sequence. The end of the fifth link 19a furthest from the sixth link 19b is hinged to a middle position of the first extension plate 7. The middle portion of the sixth link 19b is hinged to the third driving block 18c. The end of the seventh link 19c furthest from the sixth link 19b is hinged to the third driving electric motor 18a. An eighth link 19d is further mounted between the fifth link 19a and the seventh link 19c. Two ends of the eighth link 19d are hinged to the fifth link 19a and the seventh link 19c, respectively, and the eighth link 19d is arranged in parallel with the sixth link 19b.

The sliding of the second extension plate 17 is electrically controlled through the arrangement of the third driving mechanism 18 and the second linkage mechanism 19. In addition, the second linkage mechanism 19 is a four-link structure with a parallelogram structure, so that the overall structure can be more compact when the second extension plate 17 is folded.

Finally, it should be noted that the above descriptions are only preferred embodiments of the present invention. In light of the teachings of the present invention, those of ordinary skill in the art can make various similar modifications without departing from the spirit and scope of the present patent application and its claims. Such modifications are all encompassed within the scope of protection of the present patent application.

### List of References

- 1: seat frame
- 2: first slide rail
- 3: support frame
- 4: rotary bracket
- 5: second slide rail
- 6: driving crossbar
- 7: first extension plate
- 8: guide block
- 9: first support shaft
- 10: second support shaft
- 11: third slide rail
- 12: first linkage mechanism
- 12a: first link
- 12b: second link
- 12c: third link
- 12d: fourth link
- 13: connecting rod
- 14: first driving mechanism
- 14a: first driving electric motor
- 14b: first lead screw
- 14c: first driving block
- 15: second driving mechanism
- 15b: second lead screw
- 15c: second driving block
- 17: second extension plate
- 18: third driving mechanism
- 18b: third lead screw
- 18c: third driving block
- 19: second linkage assembly/second linkage mechanism
- 19a: fifth link

- 19b: sixth link
- 19c: seventh link
- 19d: eighth link

## Claims

1. An integrated leg support for a vehicle seat, comprising a seat frame (1), wherein:
a front portion of the seat frame (1) is provided with a first driving mechanism (14) and a support frame (3) capable of sliding back and forth; the support frame (3) is configured to support an occupant's thighs;
the first driving mechanism (14) is configured to drive the support frame (3) to slide out from the front portion of the seat frame (1) or retract into the seat frame (1);
a front portion of the support frame (3) is provided with a second driving mechanism (15) and a calf support assembly that is connected to the support frame (3) in a flippable manner;
the calf support assembly is configured to support the occupant's calves; and
the second driving mechanism (15) is configured to drive the calf support assembly to flip relative to the support frame (3).

2. The integrated leg support for the vehicle seat as claimed in claim 1, wherein:
the calf support assembly comprises a rotary bracket (4) rotatably arranged on the support frame (3) and a leg support extension assembly slidably arranged on the rotary bracket (4);
the leg support extension assembly comprises a driving crossbar (6) slidably arranged on the rotary bracket (4) and a first extension plate (7) connected to the driving crossbar (6);
an end portion of the driving crossbar (6) is provided with a guide block (8) slidably engaged therewith;
a sliding direction of the guide block (8) relative to the driving crossbar (6) is perpendicular in space to a sliding direction of the driving crossbar (6) relative to the rotary bracket (4);
the guide block (8) is rotatably connected to the support frame (3) via a first support shaft (9);
the rotary bracket (4) is rotatably connected to the support frame (3) via a second support shaft (10); and
the first support shaft (9) is eccentrically arranged relative to the second support shaft (10).

3. The integrated leg support for the vehicle seat as claimed in claim 2, wherein:
a third slide rail (11) is provided on an inner side of the rotary bracket (4);
the first extension plate (7) is slidably mounted on the third slide rail (11);
a first linkage mechanism (12) is provided between the driving crossbar (6) and the first extension plate (7); and
when the driving crossbar (6) slides relative to the rotary bracket (4), the first linkage mechanism (12) is able to force the first extension plate (7) to slide synchronously.

4. The integrated leg support for the vehicle seat as claimed in claim 3, wherein:
the first linkage mechanism (12) comprises a first link (12a), a second link (12b) and a third link (12c) which are hinged in sequence;
an end of the first link (12a) away from the second link (12b) is hinged to the rotary bracket (4);
a middle portion of the second link (12b) is rotatably connected to the driving crossbar (6); and
an end of the third link (12c) away from the second link (12b) is hinged to the first extension plate (7).

5. The integrated leg support for the vehicle seat as claimed in claim 4, wherein:
a fourth link (12d) is further provided between the first link (12a) and the third link (12c),
two ends of the fourth link (12d) are hinged to the first link (12a) and the third link (12c), respectively, and
the fourth link (12d) is arranged in parallel with the second link (12b).

6. The integrated leg support for the vehicle seat as claimed in anyone of the preceding claims, wherein:
a middle portion of the seat frame (1) is provided with a connecting rod (13) extending in a width direction thereof, and
the first driving mechanism (14) is arranged between the connecting rod (13) and the support frame (3);
the first driving mechanism (14) comprises a first driving electric motor (14a), a first lead screw (14b) and a first driving block (14c);
the first driving electric motor (14a) is fixedly arranged on the support frame (3);
the first lead screw (14b) is arranged on an output end of the first driving electric motor (14a) and extends toward a side where the connecting rod (13) is located; and
the first driving block (14c) is hinged to a middle position of the connecting rod (13) and threadedly connected to the first lead screw (14b).

7. The integrated leg support for the vehicle seat as claimed in anyone of the preceding claims 2 to 6, wherein:
the second driving mechanism (15) comprises a second driving electric motor (15a), a second lead screw (15b) and a second driving block (15c);
the second driving electric motor (15a) is hinged to a bottom portion of the rotary bracket (4);
the second lead screw (15b) is arranged on an output end of the second driving electric motor (15a) and extends toward a side where the support frame (3) is located; and
the second driving block (15c) is hinged to a middle position of a bottom portion of the support frame (3) and threadedly connected to the second lead screw (15b).

8. The integrated leg support for the vehicle seat as claimed in anyone of the preceding claims 2 to 7, wherein:
a second extension plate (17) is slidably mounted at a front end of the first extension plate (7);
a third driving mechanism (18) and a second linkage mechanism (19) are provided between the first extension plate (7) and the second extension plate (17); and
both the third driving mechanism (18) and the second linkage mechanism (19) are configured to drive the second extension plate (17) to slide relative to the first extension plate (7).

9. The integrated leg support for the vehicle seat as claimed in claim 8, wherein:
the third driving mechanism (18) comprises a third driving electric motor (18a), a third lead screw (18b) and a third driving block (18c);
the third driving electric motor (18a) is fixedly arranged on the second extension plate (17);
the third lead screw (18b) is arranged on an output end of the third driving electric motor (18a) and extends toward a side where the first extension plate (7) is located;
and the third driving block (18c) is hinged to the second linkage mechanism (19) and threadedly connected to the third lead screw (18b).

10. The integrated leg support for the vehicle seat as claimed in claim 8 or 9, wherein:
the second linkage mechanism (19) comprises a fifth link (19a), a sixth link (19b) and a seventh link (19c) which are hinged in sequence; an end of the fifth link (19a) away from the sixth link (19b) is hinged to the first extension plate (7); a middle portion of the sixth link (19b) is hinged to the third driving block (18c); an end of the seventh link (19c) away from the sixth link (19b) is hinged to the third driving electric motor (18a);
an eighth link (19d) is provided between the fifth link (19a) and the seventh link (19c);
two ends of the eighth link (19d) are hinged to the fifth link (19a) and the seventh link (19c), respectively; and the eighth link (19d) is arranged in parallel with the sixth link (19b).
